Europäisches Patentamt

European Patent Office

Office européen des brevets

(11) Publication number: **0 175 255**
**B1**

(12) **EUROPEAN PATENT SPECIFICATION**

(45) Date of publication of patent specification: **12.04.89**

(51) Int. Cl.⁴: **H 04 B 1/16**

(21) Application number: **85111373.8**

(22) Date of filing: **09.09.85**

(54) **Transmission method in staff location systems.**

(30) Priority: **17.09.84 SE 8404642**

(43) Date of publication of application:
**26.03.86 Bulletin 86/13**

(45) Publication of the grant of the patent:
**12.04.89 Bulletin 89/15**

(84) Designated Contracting States:
**DE GB NL**

(56) References cited:
**EP-A-0 095 750**
**GB-A-2 086 106**
**GB-A-2 114 343**

(73) Proprietor: **TATECO AB**
**Polstjärnegatan 8**
**S-41708 Göteborg (SE)**

(72) Inventor: **Enberg, Torbjörn**
**Lövskogsgaten 18**
**S-413 20 Göteborg (SE)**

(74) Representative: **Ferkinghoff, Claes-Göran et al**
**ALFONS HEDBERGS PATENTBYRA AB**
**Aschebergsgatan 35**
**S-411 33 Göteborg (SE)**

Courier Press, Leamington Spa, England.

# Description

The subject invention concerns a method of transmission in staff location systems of the kind in which information signals which are transmitted from a transmitter are immediately preceded by a search signal, known as an idle signal, each time transmission is about to take place. The system includes receivers which are provided with logic circuits to energize and deenergize the receivers with a predetermined periodicity. For instance, a receiver may be energized for a period of 10—100 ms. and be deenergized for 1—6 s. This arrangement saves energy drainage on the receiver battery.

Upon each instance of receiver energization a check is made to establish whether an idle signal is being transmitted. If it is, the receiver stays energized past the mentioned period of 10—100 ms. until such time as the information signal succeeding the idle signal has ended. Such a method is described in document EP—A—0 095 750.

Each idle signal preceded by an information signal must be somewhat longer than the receiver-deenergization period in order to bridge this time sequence and normally it is much longer than the information signal itself. The receiver energization time thus becomes predominantly dependent on the idle signal. The statistical energization time will be half the idle signal time plus the information signal time. If the idle signal is denominated I and the information signal D the statistical energization time = 0.5 I + D. During e.g. 200 search operations from the transmitter including I = 2 s and D = 0.3 s the total energization time will statistically amount to:

$$500 (0.5 . 2 + 0.3) = 650 \text{ s.}$$

The purpose of the method in accordance with the invention is to bring about a reduction of the receiver-energization time in order to save battery energy. In accordance with the teachings of the subject invention this is achieved therein that the search signal is a data signal which is divided into blocks each one of which contains data on the number of blocks remaining until the change-over to the information signal and in that as soon as the receivers, when energized, register that the data signal is being transmitted, they are arranged to be deenergized during the remaining blocks of the data signal and to be energized at the change-over to the information signal.

The method in accordance with the invention will be described in closer detail in the following with reference to the accompanying drawing, wherein

Fig. 1 is a diagram showing the transmission/reception process in accordance with a prior-art arrangement and

Fig. 2 is a diagram showing the method in accordance with the subject invention.

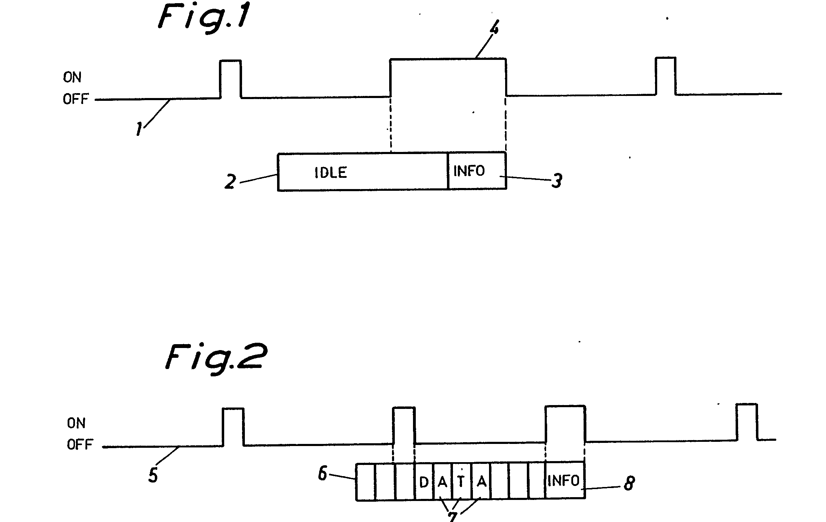

The current curve 1 in Fig. 1 shows the periodicity of the energization and deenergization periods of a receiver. The energization time during which the presence of a signal is checked may be e.g. 50 ms and the intermediate rest period would amount to e.g. 5 s. In case transmission of an idle signal 2 commences during this period the receiver, when energized, will remain open after said 5 s and receive the information contained in the subsequent signal 3. The duration of transmission of the information normaly amounts to 0.1—1 s but the period 4 during which the receiver is open amounts to at least a few seconds.

In Fig. 2 is illustrated the manner in which this period may be shortened drastically. In accordance with the current curve 5 the receiver has a periodicity during the energization conditions which is the same as before as long as there is no signal. The search signal then transmitted in accordance with the method is a data signal 6 which is divided into blocks 7 each one of which contains data defining the number of blocks remaining until the change-over to the information signal 8. When the receiver is energized during the transmission of the data signal 6 there is sufficient time during the normal receiver energization time mentioned above to register both the existence of the search signal as such and its remaining duration, that is the remaining number of blocks 7 and is therefore able to disconnect the electrical current for the duration of the remaining search signal time and to reconnect it at the change-over to the information signal 8. When the latter is ended the receiver is deenergized as before.

In accordance with the shown example the receiver remains deenergized for a period corresponding to seven blocks of data signal 6. Assuming that the number of block 7 is denoted n, the statistical energization time could be reduced according to the following equation:

$$\frac{1}{n} . 1.5 + D$$

wherein I is the length of the data signal and D the length of the information signal. The number 1.5 represents the statistical number of 1.5 blocks, since the receiver may take on an energized condition at any time during the period of one block and must listen to an entire block to obtain sufficient information regarding the number of blocks that remain.

For clarity Fig. 2 shows a data signal 6 comprising only ten blocks. In practice, however, the data signal comprises a considerably larger number of blocks. Assuming that corresponding values from the preceding example are used in the above equation and the number of block is assumed to be 64, a total receiver-energization time from 500 searching operations from the transmitter would be

$$500 (\frac{2}{64} . 1.5 + 0.3) = 174 \text{ s.}$$

The statistically calculated period during which no energy drainage on the receiver batteries takes place thus amounts to 650 − 174 = 476 s.

**Claim**

A method of transmission in staff location systems of the kind wherein information signals which are transmitted from a transmitter are immediately preceded by a search signal each time transmission is about to take place, and including receivers which are operating on a periodic energized basis and — in case a search signal is being transmitted when the energization condition is initiated — are maintained in the energized condition in order to register the information signal following the search signal, characterized therein that the search signal is a data signal which is divided into blocks, each one of which contains data as to the number of blocks remaining until the change-over to the information signal and in that as soon as the receivers, when energized, register that the data signal is being transmitted they are arranged to be deenergized during the remaining blocks of the data signal and to be energized at the change-over to the information signal.

**Patentanspruch**

Sendeverfahren bei solchen Personalortungssystemen, bei denen von einem Sender ausgesandten Informationssignalen unmittelbar ein Suchsignal jedesmal dann vorausgeht, wenn eine Sendung stattfinden soll, mit Empfängern, die auf einer periodischen Betriebsbereit/Abgeschaltet-Basis arbeiten, und, für den Fall, daß ein Signal gesendet wird, wenn der betriebsbereite Zustand begonnen wird, in dem betriebsbereiten Zustand bleiben, um das Informations-signal, das dem Suchsignal folgt, zu erfassen, dadurch gekennzeichnet, daß das Suchsignal ein in Blöcke aufgeteiltes Datensignal ist, von denen jeder Block Daten bezüglich der Anzahl der Blöcke enthält, die bis zum Wechsel auf das Informationssignal verbleiben, und daß in dem Augenblick, in dem die Empfänger, wenn betriebsbereit, erfassen, daß das Datensignal gesendet wird, sie für die Dauer der verbleibenden Blöcke der Datensignale abgeschaltet und beim Wechsel zum Informationssignal betriebsbereit gemacht werden.

**Revendication**

Procédé d'émission dans un système de localisation du type dans lequel des signaux d'information qui sont transmis à partir d'un émetteur sont immédiatement précédés par un signal de recherche chaque fois qu'une transmission doit avoir lieu et comportant des récepteurs qui fonctionnent sur la base d'une alimentation périodique en énergie et — au cas où un signal de recherche est transmis lorsque les conditions d'alimentation en énergie sont initiées — sont maintenus dans ces conditions d'alimentation en énergie, de façon à enregistrer le signal d'information qui suit le signal de recherche, caractérisé en ce que le signal de recherche est un signal numérique qui est divisé en blocs, dont chacun contient des données relatives au nombre de blocs restant à transmettre jusqu'au passage au signal d'information et en ce que les récepteurs sont construits, dès qu'ils sont alimentés en énergie et qu'ils détectent que le signal numérique est transmis, de manière à ne pas être alimentés en énergie durant la transmission des blocs du signal numérique restant à transmettre et à être alimentés en énergie, lors du passage au signal d'information.

EP 0 175 255 B1

## Fig.1

ON
OFF

| IDLE | INFO |
|------|------|

2    3    4

1

## Fig.2

ON
OFF

| | | D | A | T | A | | | INFO |

5    6    7    8